# EUROPEAN PATENT APPLICATION

(11) **EP 4 549 903 A1**
(43) Date of publication of application: **07.05.2025**
(21) Application number: 23207114.2
(22) Date of filing: 31.10.2023
(51) Int. Cl.: G01M 3/00, G01M 3/28, G01M 3/38

(54) **METHOD, PIPE INSPECTION SYSTEM, SYSTEM, AND KIT FOR INSPECTION OF A PIPE**

(71) Applicant: Preventum Innovations AB, 262 61 Ängelholm (SE)
(72) Inventor: WENNSTRÖM, Niklas, 26261 ÄNGELHOLM (SE)
(74) Representative: AWA Sweden AB

(57) **Abstract**

According to an aspect there is provided a method for inspection of a pipe installed behind a surface. The method comprises:
inserting a probe into the pipe, the probe comprising a camera head configured to provide image data representing a field-of-view of the camera head inside the pipe, the probe further comprising a sealing element configured to slidably seal against an inner surface of the pipe while the probe is advanced along the pipe;
applying a pressure difference in the pipe across the sealing element, such that a high pressure side is provided on a first side of the sealing element and a low pressure side is provided on a second side of the sealing element;
advancing the probe along the pipe towards the low pressure side, while the sealing element slidably seals against the inner surface of the pipe and while image data is captured by the camera head; and
transmitting the image data, to a unit external to the pipe.

## Description

### Technical field

The present disclosure relates to inspection of pipes, and more specifically to a method, a pipe inspection system, a system, and a pipe inspection kit for inspection of a pipe which is installed behind a surface, such as behind a floor, a wall, or a ceiling.

### Background

Pipes of various types are an important part of the infrastructure of our modern society. For example, buildings may typically be provided with pipes for water supply, used for drinking, cocking, and bathing, gas supply for gas stoves, and/or piping for heating systems. In recent years, more and more buildings are provided with water borne heating and/or cooling installed in the floor and/or in the ceiling. Such heating and/or cooling systems generally comprise a continuous, non-jointed section of pipe, which may extend back and forth several times underneath the surface so as to effectively cover an entire floor or ceiling of a room.

In the present context, pipes may be rigid pipes, which may be of metal or polymer material, and hoses, which would typically be formed of polymer material. Such hoses may be flexible as such, but may be immersed into a concrete slab or into joists, so as to be effectively non-flexible.

For maintenance and troubleshooting purposes, pipes need to be inspected e.g. in order to determine the operational status of the pipe, to determine whether the pipe has been damaged, and to locate possible leaks. However, pipes are usually hidden as they are often installed behind surfaces, such as underneath a floor, or inside a wall or a ceiling. This presents a challenge in that the pipes are not easily accessible, and may therefore be difficult to inspect.

Inspection systems are presently used to inspect pipes from the inside of the pipe. Inspection systems typically comprise a wire with a camera at one end. The camera may be inserted into an end of the pipe to provide an image of the inside of the pipe, allowing e.g. a service technician to check for damages and leaks. By pushing on the wire, the camera may be advanced into the pipe. However, there is a limit as to how far into the pipe the inspection system can reach, especially when inspecting long pipes and/or pipes with several bends, making it challenging to inspect the full length of the pipe. A particular challenge may be to effectively advance the camera inside a pipe having multiple sections separated by bends, each of which may be on the order of 90 degrees or even 180 degrees.

Hence, there is a need in the art for further improvements related to methods and instrumentation for pipe inspection.

### Summary

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided a method for inspection of a pipe which is installed behind a surface, the method comprising:
inserting a probe into the pipe, the probe comprising a camera head configured to provide image data representing a field-of-view of the camera head inside the pipe in the vicinity of the camera head, the probe further comprising a sealing element configured to slidably seal against an inner surface of the pipe while the probe is advanced along the pipe;
applying a pressure difference in the pipe across the sealing element, such that a high pressure side is provided on a first side of the sealing element and a low pressure side is provided on a second, opposite side of the sealing element;
advancing the probe along the pipe towards the low pressure side, while the sealing element slidably seals against the inner surface of the pipe and while image data is captured by the camera head; and
transmitting the image data, from the camera head to a unit external to the pipe.

It should be understood that the surface may be a surface of an indoor construction element of a building, such as a floor, a wall or a ceiling. Alternatively, the surface may be an outdoor construction element of a building, such as a base, a wall, or a roof. As yet further alternatives, the surface may be a ground surface, such as a road, a walkway, a pavement, or the like.

The pipe is installed behind the surface such that if the surface is a surface of a wall the pipe is installed inside the wall behind the wall surface, if the surface is a surface of a floor the pipe is installed below the floor surface, or if the surface is a surface of a ceiling the pipe is installed in the ceiling above the ceiling surface. In other words, at least part of the pipe may be hidden inside the construction element, behind the surface.

In the present context, it is understood that the term "pipe" may comprise both rigid pipes, which may be of metal or polymer material, and hoses, which would typically be formed of polymer material. Given as non-limiting examples, the pipe may be formed of a polymer material, such as PVC, PEX, PEM, PAL, or PP. Further, a new lining provided to a pipe that has been subject to relining is considered to be included in the term "pipe". By way of example, relining of a pipe may provide a new liner by painting or spraying a new layer to the inside of the pipe, or by inserting a flexible liner into the pipe and inflating the liner. Once in place, the new liner is cured to form a new pipe inside the original pipe.

By way of example, the pipe may be a supply pipe for water or gas. Alternatively, the pipe may be a heat exchanging circuit for providing heat to the surface such as underfloor heating, or a cooling pipe for removing heat from the surface such as underfloor or ceiling cooling. By way of further example, the pipe may alternatively be a circulation pipe for working fluid of a heat pump or an air conditioning device.

The probe may form part of a pipe inspection system configured for inspecting a pipe by carrying out the method. The probe comprises a camera head configured to provide image data representing the field-of-view of the camera head inside the pipe, in the vicinity of the camera head. Thus, once the probe has been inserted into the pipe, a field-of-view from the inside of the pipe may be captured by the camera head and transmitted to the external unit. By way of example, the camera head may comprise one or more lenses for providing the imaging of the field-of-view inside the pipe. The field-of view may be imaged into an image plane.

Given as a non-limiting example, an image detector may be arranged in the image plane, and configured to capture the image data. By the term "image detector" is here meant any unit or device onto which a plurality of separate light sensitive elements is arranged such that they may individually detect the light intensity impinging onto the respective light sensitive elements, and in response thereof produce an electrical signal. The light sensitive elements on the image detector may be arranged along one or more rectilinear lines. By way of example, an image detector may be, but is not limited to, a charge-coupled device (CCD) and complementary metal oxide semiconductor (CMOS).

Given as another non-limiting example, an end of an optical light-guide may be arranged in the image plane and configured to optically transmit the image to the external unit. The optical light-guide may comprise one or more mirrors, one or more prisms, and/or one or more optical fibers for transmission of the image data.

The probe may optionally comprise an illumination unit configured to illuminate the field-of-view of the camera head. The illumination unit may be a part of the camera head or it may alternatively be a separate part of the probe. The illuminating unit may be configured to provide sufficient illumination inside the pipe such that image data of the internal part of the pipe may be provided.

By way of example, the illumination unit may comprise one or more light sources. By the term "light source" is here meant any unit, device and/or element at which light is generated. By way of example, the light source may be, but is not limited to a light emitting diode (LED), an incandescent light source, a fluorescent light source, a laser diode, or a combination thereof. However, it is also conceivable that a light source may be arranged external to the probe. By way of example, light from such an external light source may be guided to the illuminating unit of the probe by one or more optical fibers.

Further, the probe comprises a sealing element configured to seal against an inner surface of the pipe. By this is meant that the sealing element may be configured to seal against the inner surface of the pipe, while the probe is advanced along the pipe. By way of example, the sealing element may be configured to slidingly seal against an inner surface of the pipe, so as to facilitate advancing the probe.

It serves to mention that for the sealing element to "seal" is here meant that the sealing element is configured to allow for maintaining a pressure difference across the sealing element of the probe, which pressure difference is large enough to be measurable.

By way of example, applying a pressure difference in the pipe across the sealing element may be provided by a vacuum pump removing air from the low pressure side on the second side of the sealing element, by a compressor providing an overpressure on the high pressure side on the first side of the sealing element, by providing a jet of pressurized air in the pipe on the high pressure side on the first side of the sealing element, or a combination thereof.

Transmitting the image data from the camera head to the unit external to the pipe may be achieved in a number of different manners. By way of example, if the camera head comprises an image detector, the image data may be digitized image data. The image data may thus be in the form of a number of digital images, or a digital video sequence. The image data may in such a case be electronically transmitted by an electrically conducting cable. Alternatively digitized image data may be transmitted via an optic communications cable, comprising an optic fiber. As yet another alternative, digitized image data may be wirelessly transmitted.

It serves to mention that the image of the image plane of the imaging lens may alternatively be optically transmitted via an optical light-guide. In this manner, the optical image may be transmitted to the unit external to the pipe. The unit external to the pipe may in such a case comprise an image detector, for capturing the image data.

The external unit may be configured for storing the image data. The external unit may be configured for analyzing the image data. By way of example, the external unit may be configured to determine the condition of the internal part of the pipe, such as identification of a damage and/or a leak in the pipe, or such as identification of a join between two or more sections of the pipe. Given as a non-limiting example, identification of leaks or joints may be provided by means of an artificial intelligence (Al), which has been trained to discover leaks and/or joint.

Further, the external unit may comprise a display, and may thus be configured to display the image data, on the display, thereby allowing presentation of the image data to a user such as a service technician. By the present arrangement, real-time inspection of the pipe may be performed manually, by the user watching the display. The user may be able to determine the condition of the pipe, for example by checking the pipe for leaks or bad joints.

An advantage is that an additional force required to advance the probe along the pipe may be small compared to when no pressure difference is applied across the sealing element. By the present arrangement, a method and a pipe inspection system for inspection of a pipe may be provided, wherein the advancement of the probe and thus the camera head along the pipe may be facilitated.

Another advantage is that the pressure difference applied across the sealing element may assist in moving the probe and thus the camera head passed bends in the pipe. Conventional pipe inspection systems may have difficulties in passing bends in pipe, as it may be difficult to provide the required force in the required direction inside the pipe. This is especially problematic in long pipe systems having several bends. However, by the present arrangement the problem is overcome by the pressure difference across the sealing element that may assist in pulling and/or pushing the probe and camera head in the right direction along the pipe.

Yet another advantage is that transmission of image data from inside the pipe to the unit external to the pipe, may be provided continuously during the advancement of the probe and camera head along the pipe. By the present arrangement, a method may be provided wherein the probe may be easily and quickly advanced along the pipe and wherein the camera view of the inside of the pipe being inspected may be provided substantially instantly. Hence, a method for quickly and accurately inspecting a pipe, for example for determining the position of a leak, may be provided.

By "advancing the probe" is here meant that the probe may be advanced along the pipe, while the sealing element maintains a seal against the inner surface of the pipe. Advancing the probe along the pipe may be achieved in a variety of different manners.

According to an embodiment, the advancing the probe along the pipe comprises using a force, resulting from the pressure difference, exerted onto the sealing element to advance the probe along the pipe.

By way of example, the advancing of the probe along the pipe may be achieved by the pressure difference applied across the sealing element. The pressure difference may exert a force onto the sealing element, large enough to overcome the frictional forces between the sealing element and the inner surface of the pipe such that the probe and the sealing element is pushed from the high-pressure side towards the low-pressure side of the pipe.

Even if the pressure difference is not large enough to overcome the frictional forces between the sealing element and the inner surface of the pipe, the sealing element may experience a force in a direction along the pipe, due to the pressure difference applied across the sealing element.

An advantage with the present embodiment is that an additional force required to advance the probe along the pipe may be further reduced, and possibly eliminated, compared to when no pressure difference is applied across the sealing element. By the present arrangement, a method and a pipe inspection system for inspection of a pipe may be provided, wherein the advancement of the probe, and thus the camera head, along the pipe may be further facilitated. In the manner described above, a method and a pipe inspection system may be provided, allowing for the probe and the camera head to be inserted further into the pipe than otherwise possible if using conventional methods or conventional pipe inspection systems.

According to an embodiment, a wire is connected to the probe and wherein the advancing the probe along the pipe comprises applying a compressive force along the wire to advance the probe along the pipe.

By way of example, the probe may be connected to a wire that may extend from the probe, along the pipe to the end into which the probe is inserted. Thus advancing the probe may alternatively or additionally be achieved by use of the wire. By the use of the wire, the probe may be guided inside the pipe, e.g. by pulling or pushing the wire from outside the pipe. In some embodiments, the wire may be able to support tensile forces only along its length, but which would collapse if subjected to a compressive force. Alternatively, the wire may be in the form of a semi rigid wire, which may support also some compressive forces along its length. As yet another alternative, the wire may resiliently bend with the radius of curvature of the pipe as a flexible rod. As yet another alternative, the wire may be in the form of a tube or a hose of a polymer material.

An advantage with the present embodiment is that it provides an easy yet efficient manner of controlling the movements of the probe inside the pipe, by pulling and pushing the wire, in order to advance or revert the probe.

It serves to mention that the wire may optionally be provided with also other functionalities.

By way of example, the wire may additionally comprise means for transmitting image data. By way of example, the wire may comprise one or more electric cables, allowing wired transmission of image data through the wire. By the present arrangement, digital image data may be transmitted from an image detector in the camera head. By way of further example, the wire may comprise an optical light-guide. The optical light-guide may be configured to transmit optical image data from the camera head to the external unit. In such an arrangement, it is conceivable that an image detector is alternatively arranged in the external unit in order to digitize the image data.

By way of further example, electric power may be supplied through the wire to the probe. Thus, a power lead may form part of the wire such that electric power is provided to the probe. The electrical power provided via the wire may be used to drive image acquisition by the image detector in the camera head. The electrical power may further be used to drive an illumination source of the probe.

By way of further example, in embodiments wherein the probe has a sealing element with a variable diameter, fluid, such as gas, may be supplied, and optionally extracted, through a tube of the wire to the sealing element, in order to inflate the sealing element.

According to an embodiment, the unit external to the pipe comprises a display, the method further comprising:
displaying, on the display of the unit, preferably in real-time, the image data representing the field-of-view inside the pipe.

By way of example, the image data may be displayed on the display of the unit such that the image data is presented to a user inspecting the pipe. By the present arrangement, a visual indications of the internal condition of the pipe may be provided to the user continuously, in real-time during advancement of the probe along the pipe.

An advantage with the present embodiment is that a substantially instant information about the internal condition of the pipe may be provided in real-time to the user inspecting the pipe. Thus, a method for quickly inspecting the pipe may be provided.

According to an embodiment, the method further comprises:
identifying a leak in the pipe based on the image data, when the leak is present in the field-of-view of the camera head.

When the leak is present in the field-of-view of the camera head, the leak may be detectable in the image data. By way of example, if the image data is displayed to a user on the display of the external unit, the leak may be visually identifiable to the user. Thus, the identification of a leak in the pipe may be performed manually, by the user watching a display displaying the image data. By way of further example, the identification of a leak in the pipe may be performed automatically, for example by an artificial intelligence, which has been trained to discover leaks in image data.

By the present arrangement, an efficient and fast method for identification of the position of a leak in a pipe may be provided.

According to an embodiment, the method further comprises:
advancing the probe along the pipe such that the sealing element passes a position of the leak;
detecting a change in pressure in the pipe when the sealing element passes the position of the leak.

By way of example, the advancing the probe may comprise advancing the probe along the pipe, while the sealing element seals against the inner surface of the pipe, such that the sealing element passes the leak. A change in pressure in the pipe may occur as the probe passes the position of the leak. A pressure gauge may be used for determining the change in pressure in the pipe when the sealing element passes the position of the leak.

By way of example, a reading of the pressure gauge may be presented to a user simultaneously with displaying the image data on the display of the unit. By the present arrangement, indications by dual parameters may be used to find the position of the leak.

An advantage with this embodiment is that dual indications of the position of the leak may provide improved precision of finding the position of the leak.

Another advantage of using visual indication in addition to detecting the change in pressure is that, if the leak is small, the leak may not necessarily give rise to any pressure change when the sealing element passes the leak, or may give rise only to a small change in pressure, not easily detectable. Thus, a leak detection device configured to solely monitor the pressure difference may fail in detecting a pressure change, and thus the position and/or the presence of the leak.

According to an embodiment, the method further comprises, prior to said inserting step:
identifying an inner diameter and/or cross-sectional shape of the pipe;
selecting the sealing element from a set comprising at least two sealing elements that differ from each other with respect to an outer diameter and/or an outer cross-sectional shape, such that a selected sealing element has an outer diameter and an outer cross-sectional shape that corresponds to said inner diameter and/or cross-sectional shape of the pipe; and
attaching said selected sealing element to the probe.

According to an embodiment, the sealing element has a constant outer diameter adapted to fit to an inner diameter of the pipe.

An advantage with the present embodiment is that a sealing element that is adapted to fit to an inner diameter of the pipe may easily be selected such that it may seal against an inner surface of the pipe. By way of example, a set of sealing elements may be provided wherein the outer diameters of the sealing elements are different such that they are adapted to fit pipes with different inner diameters. A user may measure the inner diameter of the pipe in question, and then select the sealing element from the set of sealing elements that best fits said inner diameter, and connect the sealing element to the probe. Further adjustment of the outer diameter of the sealing element may not be required.

According to an embodiment, the method further comprises:
adjusting a variable outer diameter of the sealing element such that the outer diameter of the sealing element matches the inner diameter of the pipe, thereby allowing the sealing element to slidably seal against the inner surface of the pipe.

According to an embodiment, the sealing element has a variable outer diameter. By way of example, the sealing element may be inflatable.

An advantage with the embodiment is that the outer diameter of the sealing element may be changed when the sealing element is inside the pipe. By the present arrangement the outer diameter of the sealing element may be adapted to variations of the inner diameter along the pipe.

Another advantage is that as the outer diameter of the sealing element is varied, the frictional forces between the inner surface of the pipe and the sealing element may vary. By the present arrangement, sliding of the sealing element may be adapted to the level of sliding required by different parts of the pipe, as for example to provide easier sliding of the sealing element in order for the sealing element to pass bends in the pipe.

According to an embodiment, the applying a pressure difference comprises:
connecting a vacuum pump to the pipe; and
removing, by the vacuum pump, air from inside the pipe on the second side of the sealing element, thereby providing the low pressure side of the sealing element.

Given as a non-limiting example, the vacuum pump may comprise a pressure gauge which may indicate a pressure in the pipe provided by the vacuum pump. Alternatively, an external pressure gauge may be connected to the connection between the vacuum pump and the pipe to provide an indication of the pressure in the pipe.

An advantage with the embodiment is that easier control of the advancement of the probe along the pipe may be provided. For example, if a very high overpressure is alternatively provided, the probe may advance faster along the pipe than desired, and the control by a user of the movement of the probe may be less precise. Put differently, providing a negative pressure on the second side of the sealing element may be advantageous to providing an over pressure on the first side of the sealing element, when providing the pressure difference across the sealing element.

According to an embodiment, proximity of the probe is wirelessly detectable, and wherein the method further comprises determining the position of the probe by scanning a probe detector across the surface, the probe detector being configured to wirelessly detect proximity of the probe.

By way of example, the probe may be an active probe, having a transmitter configured to transmit electromagnetic radiation, detectable by the probe detector. By way of further example, the probe may be a passive probe, having a reflector configured to reflect electromagnetic radiation emitted by the probe detector. By the term "electromagnetic radiation" is here meant any type of radiation involving an electric field and/or magnetic field. By way of example, an alternating current provided through an electrically conducting wire may provide an alternating electric field in the vicinity of the wire. Such an electric field may be wirelessly detectable.

Alternatively, the probe may have a transmitter configured to transmit an acoustic wave detectable by the probe detector, or the probe may have a reflector configured to reflect an acoustic wave emitted from the probe detector. An acoustic wave may be in the form of a pulse, a series of pulses, a continuous wave of constant amplitude, or a periodically varying wave.

An advantage with the present embodiment is that, once a feature such as a leak has been identified, the probe may be left at the position of the leak, and thus by wirelessly detecting the probe it is easy to find the position of probe behind the surface, and thus the position of the leak.

Optionally, the probe detector may be further configured to detect a distance between the probe detector and the probe such that the probe detector may determine how deep behind the surface the probe is located.

By way of example, the pipe may be installed about 0.1-0.5 cm below the surface, about 0.5-5 cm below the surface, about 5-10 cm below the surface, about 10-15 cm below the surface, about 15-20 cm below the surface, about 20-25 cm below the surface, about 25-30 cm below the surface, about 30-35 cm below the surface, about 35-40 cm below the surface, about 40-45 cm below the surface or about 45-50 cm below the surface. By way of further example, the pipe may alternatively be installed more than 0.5 m below the surface, such as about 1 m below the surface, about 2 m below the surface, about 3 m below the surface, or about 6 m below the surface.

An advantage with this embodiment is that, if the depth of the pipe is not known, an indication of the depth by the probe detector may be useful as it provides an indication on how deep into the construction element it is required to tear down the construction element in order to reach the leak and thus in order to repair the leak.

According to a second aspect there is provided a pipe inspection system for inspection of a pipe, which has a predetermined cross-section and which is installed behind a surface, the pipe inspection system comprising:
a probe, which is insertable into the pipe, the probe comprising:
a camera head configured to provide image data representing a field-of-view of the camera head inside the pipe in the vicinity of the camera head,
a sealing element configured to slidably seal against an inner surface of the pipe while the probe is advanced along the pipe, and
a transmission device configured to transmit the image data to a unit that is external to the pipe,
wherein the external unit is configured for storing, analyzing and/or displaying the image to allow inspection of the pipe.

According to an embodiment, the sealing element is releasably attachable to the probe.

According to an embodiment, the pipe inspection system further comprises:
a vacuum pump connectable to the pipe and configured to remove air from inside the pipe.

According to an embodiment, the pipe inspection system further comprises a wire releasably connectable to the probe.

According to a third aspect there is provided a system comprising a pipe which is installed behind a surface and a pipe inspection system according to the second aspect.

According to a fourth aspect there is provided a pipe inspection kit for inspection of a pipe, the pipe inspection kit comprising:
a probe, which is insertable into the pipe, the probe comprising:
   a camera head configured to provide image data representing a field-of-view of the camera head inside the pipe in the vicinity of the camera head,
   at least two sealing elements, each of which is releasably connectable to the probe and configured to slidably seal against an inner surface of the pipe while the probe is advanced along the pipe, wherein the at least two sealing elements differ from each other with respect to an outer diameter and/or an outer cross-sectional shape,
   a transmission device configured to transmit the image data to a unit that is external to the pipe,
wherein the external unit is configured for storing, analyzing and/or displaying the image to allow inspection of the pipe.

Effects and features of the second, third and fourth aspects are largely analogous to those described above in connection with the first aspect. Embodiments mentioned in relation to the first aspect are largely compatible with the second, third and fourth aspects. It is further noted that the disclosure relates to all possible combinations of features unless explicitly stated otherwise.

Other objectives, features and advantages of the present disclosure will appear from the following detailed description, from the attached claims as well as from the drawings.

### Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.
Fig. 1 schematically illustrates a pipe installed behind a surface.
Figs 2a-2c schematically illustrate a pipe inspection system performing the method for inspection of a pipe.

### Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

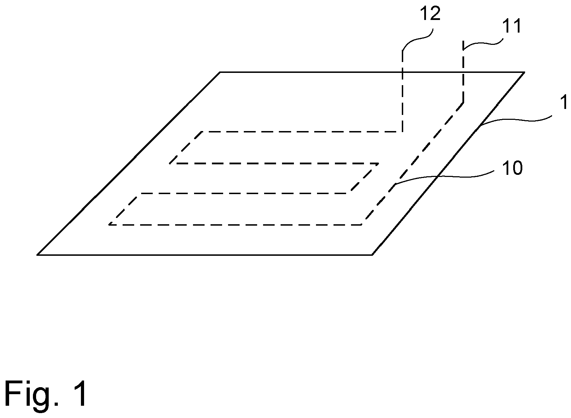

Fig. 1 schematically illustrates a pipe 10 installed behind a surface 1. In the present example, the surface 1 is a surface of an indoor floor. However, it should be understood that the surface 1 may alternatively be another surface of an indoor construction element of a building, such as a wall or a ceiling. Alternatively, the surface 1 may be a surface of an outdoor construction element of a building, such as a base, a wall, or a roof. As yet further alternatives, the surface 1 may be a ground surface, such as a road, a walkway, a pavement, or the like.

In the present example, the pipe 10 is part of a heat exchanging circuit for providing heat to the surface 1 by underfloor heating. However, it should be understood that the pipe may alternatively be any other type of pipe 10 configured for providing a flow of liquid or gas therethrough. Henceforth, a pipe installed in a floor underneath the floor surface will be discussed. However, it should be understood that the technical reasoning related to the pipe 10 and to the method and the pipe inspection system for inspection of the pipe 10 is analogously applicable in all other variants of pipe installations mentioned herein.

The pipe 10 may have a first end 11 and a second end 12. By way of example, the first and second ends 11, 12 may be configured for supplying a flow of fluid, such as gas or liquid, such as water, to and from the pipe, respectively. However, it is conceivable that the pipe 10 may have also other ends and/or that the first and second ends 11, 12 may serve different purposes such as providing access to a specific section of the pipe 10 for enabling draining the pipe 10. The first and second ends 11, 12 may be accessible externally to the construction element, thus accessible above the surface 1. Given as a non-limiting example, the first and second ends 11, 12 may extend through the surface 1 underneath which the pipe 10 is installed and hidden, such that the first and second ends 11, 12 are not hidden but rather accessible externally to the surface 1. For example, the pipe 10 illustrated in Fig. 1 being installed and hidden underneath a floor surface, through which the first and second ends 11, 12 may extend such that they may be accessed by e.g. a service technician and/or for connection to further portions of the relevant installation.

The pipe 10 may extend straight between first and second ends 11, 12 thereof. Alternatively, it may be arranged in a pattern, such as, but not limited to, back-and-forth or a meandering pattern. By way of example, underfloor heating is typically intended to supply heat to a large portion of a floor, such as the entire surface of the floor. A pipe for underfloor heating may thus have a pattern extending across a large portion of the floor. Such a pattern may involve several bends of the pipe 10, as illustrated in Fig. 1.

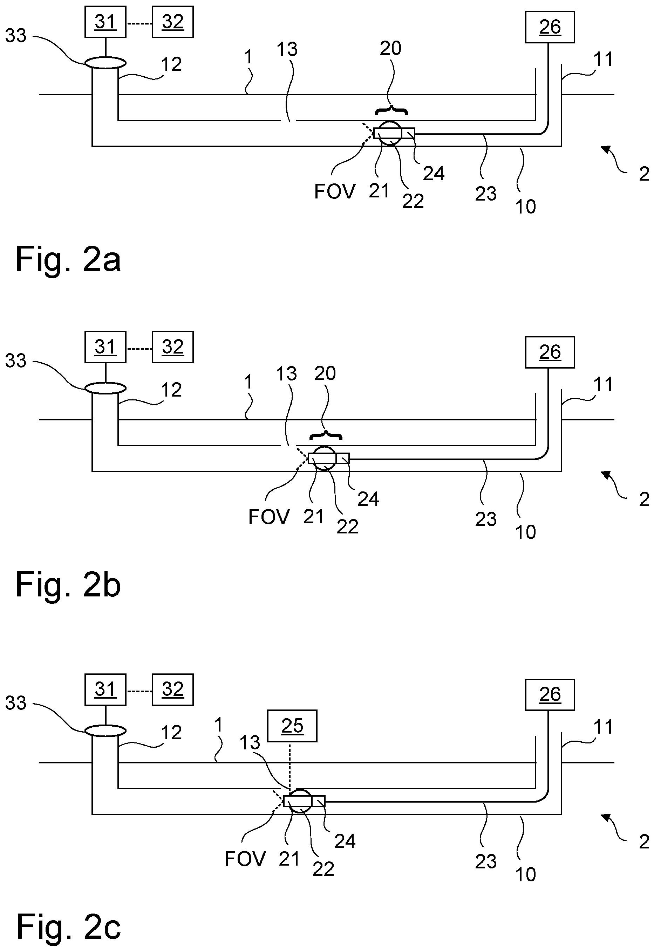

By way of example, the pipe 10 for underfloor heating may typically be installed at a depth of about 0.1-5 cm below the surface. However, it should be realized that the pipe 10 may be installed at any depth that is reachable by the pipe inspection system, which will be described in relation to Figs 2a-2c.

Figs 2a-2c schematically illustrate a pipe inspection system 2 performing the method for inspection of a pipe 10. In the present example, the pipe 10 comprises a leak 13 and the pipe inspection system 2 is here used for inspection of the pipe 10 in order to find the position of the leak 13. However, it should be understood that the pipe inspection system 2 may be used for any type of inspection of a pipe 10 even when no leak 13 is present in the pipe 10.

Referring to Figs 2a-2c, the pipe inspection system 2 will now be described.

The pipe inspection system 2 is configured for inspection of a pipe 10, which has a predetermined cross-section and which is installed behind a surface 1. The pipe inspection system 2 comprises a probe 20, a transmission device 24, and optionally a wire 23.

The probe 20 is insertable into the pipe 10. The probe 20 comprises a camera head 21 configured to provide image data representing a field-of-view (FOV) of the camera head 21 inside the pipe 10 in the vicinity of the camera head 21. The camera head 21 may comprise one or more lenses for providing the imaging of the field-of-view. The field-of view may be imaged into an image plane inside the camera head 21, wherein an image detector may be arranged, and configured to capture the image data. Thus, once the probe 20 has been inserted into the pipe 10, a field-of-view from the inside of the pipe 10 may be captured by the camera head 21.

Optionally, the probe 20 may further comprise an illumination unit (not illustrated here). The illumination unit may provide illumination of the field-of-view of the camera head 21 such that the inside of the pipe 10 is visible to the camera head 21.

The camera head 21 is connected to a transmission device 24. The transmission device 24 is configured to transmit the image data to a unit 26 that is external to the pipe 10. Transmission of the image data is typically performed substantially instantly, in order to provide real-time image data from the camera head 21 inside the pipe 10. In the present example, the wire 23 may comprise an electrically conducting cable. Further, the transmission device 24 and the external unit 26 are connectable to the wire 23, such that the transmission of image data from the transmission device 24 to the external unit 26 may be performed electronically via the cable in the wire 23. Alternatively, the image data may be transmitted via one or more optical fibers of the wire 23, or the image data may be transmitted by wireless transmission from the transmission device 24 to the external unit 26.

The external unit 26 is configured for storing, analyzing and/or displaying the image to allow inspection of the pipe 10. In the present example, the external unit 26 forms part of the pipe inspection system 2. The external unit 26 may be in the form of a handheld unit 26 that may be held by one hand of a user operating the pipe inspection system 2 when inspecting the pipe 10. The external unit 26 may further comprise a display, on which the image data is displayed to the user in real-time.

Alternatively the external unit 26 may be a separate unit, such as a general purpose computer, to which the pipe inspection system 2 may be connectable.

The probe 20 further comprises a sealing element 22 configured to slidably seal against an inner surface of the pipe 10 while the probe 20 is advanced along the pipe 10.

The sealing element 22 is an element, which in some embodiments may have a fixed outer diameter. The outer diameter is specifically adapted for the inner cross-sectional diameter of the pipe 10, such that the sealing element 22, once the probe 20 is inserted into the pipe 10, will seal against the inner surface of the pipe 10. By way of example, the sealing element 22 may be configured to slidably seal against an inner surface of the pipe 10, so as to facilitate advancing the probe 20. As illustrated in Figs 2a-2c, the sealing element 22 may be in the shape of a sphere. The sealing element 22 may have an outer diameter adapted to fit to an inner diameter of the pipe 10. Thus, the outer diameter of the sealing element 22 may match the inner diameter of the pipe 10. However, it should be understood that the shape of the sealing element 22 is not limited to a sphere, but may have any other shape suitable for sealing against the inner surface of the pipe 10, such as the shape of a cylinder or a disk. Additionally, circumferentially extending ridges or flexible lips may be provided.

In some embodiments, the sealing element 22 may be integrated with the probe 20. In case of the sealing element 22 being integrated with the probe 20, it is conceivable that a set of probes 21 with sealing elements 22 having different diameters may be provided. The present arrangement allows for selection of a probe 20 having a sealing element 22 adapted to fit various inner diameters of pipes 10.

In other embodiments, the sealing element 22 may be releasably attachable to the probe 20, e.g. by a threaded connection, a bayonet connection or a snap connection. In case of the sealing element 22 being releasably attachable to the probe 20, it is conceivable that a set of sealing elements 22 having different diameters may be provided. By way of example, the pipe inspection system 2 may optionally be provided as part of pipe inspection kit. The pipe inspection kit may comprise, in addition to the pipe inspection system 2, at least two sealing elements 22, each of which is releasably connectable to the probe 20. The sealing elements 20 may differ from each other with respect to an outer diameter and/or an outer cross-sectional shape. The present arrangement allows for selection of a sealing element 22 adapted to fit various inner diameters of pipes 10, to be attached to the probe 20.

In some alternative embodiments, the sealing element 22 may have a variable outer diameter, e.g. by being inflatable. By the present arrangement, the outer diameter of the sealing element 22 may be varied such that it may fit various inner diameters of pipes 10.

A wire 23 may be optionally connected to the probe 20. The wire 23 may provide a number of optional functionalities.

The wire 23 may be used to guide the probe 20 inside the pipe, and to retract the probe 20 from the pipe 10, once the inspection of the pipe is finished. By way of example, the probe 20 may be advanced along the pipe 10 by applying a compressive force along the wire 23, thereby providing a push to the probe 20 via the wire 23.

Further, a vacuum pump 31 may optionally be provided. The vacuum pump 31 may be connectable to the pipe 10. The vacuum pump 31 may be configured to remove air from inside the pipe 10. The vacuum pump may alternatively be provided as being part of the pipe inspection system 2, as being part of the pipe inspection kit, or as a stand-alone unit.

The vacuum pump 31 may comprise a pressure gauge 32. The pressure gauge 32 may be configured to provide an indication of a pressure, and thus the vacuum level in the pipe 10, provided by the vacuum pump 31.

As illustrated in Figs 2a-2c, the vacuum pump 31 may be connected to the pipe 10 by a vacuum connector 33. By way of example, the probe may be inserted at the first end 11 of the pipe, whereas the vacuum pump 31 may be connected to the second end 12 of the pipe 10. Thus, once the vacuum pump 31 is started to remove air from inside the pipe 10, air is removed from the second side of the probe 20, thereby providing a low pressure side on the second side. By the present arrangement, an evacuated section of the pipe 10 may be provided on the second side of the probe 20.

However, it serves to mention that other alternatives of connecting the vacuum pump 31 to the pipe 10 are conceivable. By way of example, the vacuum pump 31 may alternatively be connected to the probe 20. A connection of the vacuum pump 31 to the probe 20 may be provided either by a separate tube or, if the wire 23 is provided with a tube, via the tube in the wire 23. The probe 20 may in such a case comprise a through connection allowing passage of air between a first side and a second side of the probe 20. The vacuum pump 31 may be connected to the through connection at the first side of the probe 20 such that, when the vacuum pump 31 is started to remove air inside the pipe 10, air is removed from the second side of the probe 20, thereby providing a low pressure side on the second side.

Optionally, as a part of the pipe inspection system 2 and/or the pipe inspection kit, there may be provided a probe detector 25, configured to wirelessly detect proximity of the probe 20. By the present arrangement, once the probe 20 has been inserted into the pipe 10, the position of the probe 20 may be determined by scanning the probe detector 25 across the surface 1. The probe detector 25 may comprise a receiver for receiving electromagnetic radiation from the probe 20 and for measuring a strength of the electromagnetic radiation. In embodiments wherein the probe 20 is an active probe, electromagnetic radiation emitted by the probe 20 is detectable by the probe detector 25. In embodiments wherein the probe 20 is a passive probe, the probe detector 25 may be further configured to emit electromagnetic radiation that may be reflected by the probe 20 back to the probe detector 25.

The probe detector 25 may further comprise signal indicator for indicating the strength of the electromagnetic radiation to a user. The indicator may be an optical indicator, e.g. providing one or more lamps, which are selectively driven in response to the strength, or a display showing a number corresponding to the value corresponding to the detected strength of radiation. Alternatively or as a supplement, the indicator may comprise an acoustic indicator, providing an acoustic indication of the strength. By the present arrangement, proximity of the probe 20 to the probe detector 25 may be wirelessly detected.

The probe detector 25 may optionally comprise a distance indicator. Thus, the probe detector 25 may indicate the absolute distance between the probe detector 25 and the probe 20. By the present arrangement, the probe detector 25 may provide an indication about how deep underneath the surface 1 the probe 20 is located.

Referring to Fig. 2a, the method for inspection of a pipe which is installed behind a surface will now be described. It serves to mention that prior to using the method for pipe inspection, if the pipe is e.g. a pipe for water, the pipe should be emptied and preferably all water should be removed from the pipe as for example by the use of pressurized air.

Prior to inserting the probe 20 with the camera head 21 into the pipe 10 for inspection, the inner diameter and/or cross-sectional shape of the pipe 10 may need to be identified and an appropriate sealing element 22 selected. By way of example, an appropriate sealing element 22 may be selected from a set of sealing elements that differ from each other with respect to an outer diameter and/or an outer cross-sectional shape. The selected sealing element 22 should have an outer diameter and an outer cross-sectional shape that corresponds to said inner diameter and/or cross-sectional shape of the pipe. Once the appropriate sealing element 22 has been selected, the sealing element 22 may be attached to the probe 20.

As illustrated in Fig. 2a, the probe 20 is inserted from the first end 11 of the pipe 10. The camera head 21 of the probe 20 provides image data of the field-of-view of the inside of the pipe 10. Typically, the field-of-view of the camera head 21 is directed in the forward direction of the probe 20, thus the same direction as the probe advances along the pipe 10. The camera head 21 may provide image data continuously and in real-time. The image data is transmitted from the camera head 21, by the transmission device 24, to the unit 26 external to the pipe 10. The external unit 26 may comprise a display for displaying the image data, thereby providing to a user a visual view of the inside of the pipe 10, at the vicinity of the camera head 21. Thus, the user watching the display may inspect the inside of the pipe 10.

In the present example, the vacuum pump 31 is connected to the second end 12 of the pipe 10, by means of the vacuum connector 33. The sealing element 22, attached to the probe 20, seals against the inside of the pipe 10. While the probe 20 is inserted and as the vacuum pump 31 is activated, air is removed by the vacuum pump 31 from inside a section of the pipe 10, between the sealing element 22 and the second end 12. By the present arrangement, a pressure difference is applied in the pipe 10 across the sealing element 22, providing a low pressure side, or even an evacuated side, of the pipe 10 between the sealing element 22 and the second end 12 of the pipe 10. Since the sealing element 22 seals against the inner surface of the pipe 10, substantially no air will escape past the sealing element 22 and into the evacuated section of the pipe 10.

As the sealing element 22 slidably seals against the inner surface of the pipe 10, the probe 20 may be advanced along the pipe 10 during operation of the vacuum pump 31. In the present arrangement the probe 20 may be moved towards the second end 12 of the pipe 10, and thus towards the low pressure side. The advancement of the probe 20 along the pipe 10 towards the low pressure side may be assisted or even driven by the pressure difference across the sealing element 22 resulting in a force exerted onto the sealing element 22.

The force exerted by the pressure difference onto the sealing element 22 may be large enough to overcome the frictional forces between the sealing element 22 and the inner surface of the pipe 10 such that the probe 20 and the sealing element 22 are pushed from the high pressure side towards the low pressure side of the pipe 10. An advantage with the advancement being assisted or driven by the pressure difference across the sealing element 22 is that advancing the probe 20 past a bend in the pipe 10 may be facilitated. By the present arrangement, the probe 20 and thus the camera head 21 may be able to reach farther into the pipe 10, and past more bends of the pipe 10 than otherwise possible with conventional inspection systems.

Optionally, a lubricant may be provided on the sealing element 22 so as to further facilitate its advancement along the pipe 10, while maintaining a good seal against an inner surface of the pipe 10.

It serves to mention that with the wire 23 connected to the probe 20, the advancing the probe 20 along the pipe 10 may be further assisted by applying a compressive force along the wire 23 to provide an additional push forward. The wire 23 may further be used to retract the probe 20 partially or fully, when required.

Image data is captured by the camera head 21 and transmitted to the external unit 26, where it may be displayed for inspection by a user. Image data is continuously captured during advancement of the probe 20, allowing inspection along the inside of the pipe 10 to be made. As the probe 20 is advancing along the pipe 10, probe 20 may encounter a damage of the pipe 10, such as a leak 13, as illustrated in Fig. 2b. In the present example, the leak 13 may be seen in the display such that the user may be able to identify the presence of the leak 13, in the vicinity of the probe 20. The user may move the probe 20 back and forth along the pipe 10, for example by pushing and pulling the wire 23, unit the probe 20 is positioned close to or at the position of the leak 13.

Once the position of the leak 13 along the pipe 10 has been determined, the vacuum pump 31 may, but need not, be deactivated, and/or the probe 20 may be locked into its current position.

Optionally, the probe detector 25 may then be scanned across the surface 1 while paying attention to its indication of the strength of the electromagnetic radiation until a position corresponding to a maximum strength has been determined. This position corresponds to the position of the probe 20 inside the pipe 10, and thus to the position of the leak 13.

At this point, the position of the leak may be indicated on the surface 1, such that actions can be taken to repair it.

It serves to mention that finding the position of the leak 13 may optionally be further assisted by monitoring also the pressure of the pressure gauge 32, as will now be described.

While the leak 13 is in the evacuated section of the pipe 10, on the second side of the probe 20, air may be drawn from outside the pipe 10 through the leak 13 and into the evacuated section of the pipe 10 as a result of the negative pressure in the pipe 10. The pressure in the evacuated section of the pipe 10 as a result of the balance between the work of the vacuum pump 31 and the air drawn through the leak 13 may be indicated by the pressure gauge 32.

However, if the probe 20 passes the leak 13, the leak 13 is no longer positioned in the evacuated section of the pipe 10. Thus, once the probe 20 has passed the leak 13, air may be prevented from flowing from outside the pipe 10 through the leak 13 and into the evacuated section of the pipe 10. Consequently, this will result in an increase in the vacuum level, or put differently, this will result in a decrease in the pressure in the evacuated section of the pipe 10, which may be detectable at the pressure gauge 32. Alternatively or additionally, the vacuum pump 31 may start to work harder as less air is now present in the pipe 10, and such a change in operation of the vacuum pump 31 may produce an audible change in sound from the vacuum pump 31 and may be detectible by the user.

If the probe 20 is moved in the opposite direction in the pipe 10, for example by pulling the probe connection 23, the sealing element may pass the leak 13 again, such that the leak 13 is once again located in the evacuated section of the pipe 10 between the sealing element 22 and the second end 12. Once again air may be drawn through the leak 13 and into the evacuated section of the pipe 10 as a result of the negative pressure in the pipe 10. The pressure in the evacuated section of the pipe 10 may thus increase once again, which pressure increase may be indicated by the pressure gauge 32.

By moving the probe 20 back and forth across the leak 13 along the pipe 10, preferably with smaller and smaller movements, it may be possible to home in on the position of the leak 13. Back and forth movement of the probe 20 may for example be provided by alternatingly pushing and pulling the probe connector 23.

In the manner described above, fast pipe inspection may be provided that may find possible leaks or other damages in the pipe quickly, since the camera head 21 may provide substantially instant image data from which the presence of a leak 13 may be quickly identified, while the probe 20 is advanced along the pipe 10. Moreover, by the advancement of the probe 20 being assisted by or driven by the force, resulting from the pressure difference, exerted onto the sealing element 22, the probe 20 and thus the camera head 21 may be inserted farther into the pipe than otherwise possible if using conventional methods or conventional inspection systems. This may be especially important when inspecting pipes comprising several bends. Further, once the position of the leak 13 has been found by the camera head 21, the positioning of the probe 20 at the leak 13 may be further assisted by monitoring also the pressure of the pressure gauge 32, for even more accurately locating the leak 13.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for inspection of a pipe which is installed behind a surface, the method comprising:
inserting a probe into the pipe, the probe comprising a camera head configured to provide image data representing a field-of-view of the camera head inside the pipe in the vicinity of the camera head, the probe further comprising a sealing element configured to slidably seal against an inner surface of the pipe while the probe is advanced along the pipe;
applying a pressure difference in the pipe across the sealing element, such that a high pressure side is provided on a first side of the sealing element and a low pressure side is provided on a second, opposite side of the sealing element;
advancing the probe along the pipe towards the low pressure side, while the sealing element slidably seals against the inner surface of the pipe and while image data is captured by the camera head; and
transmitting the image data, from the camera head to a unit external to the pipe.

2. The method according to claim 1, wherein the advancing the probe along the pipe comprises using a force, resulting from the pressure difference, exerted onto the sealing element to advance the probe along the pipe.

3. The method according to any one of claims 1 or 2, wherein a wire is connected to the probe and wherein the advancing the probe along the pipe comprises applying a compressive force along the wire to advance the probe along the pipe.

4. The method according to any one of the preceding claims, wherein the unit external to the pipe comprises a display, the method further comprising:
displaying, on the display of the unit, preferably in real-time, the image data representing the field-of-view inside the pipe.

5. The method according to any one of the preceding claims, further comprising:
identifying a leak in the pipe based on the image data, when the leak is present in the field-of-view of the camera head.

6. The method according to claim 5, further comprising:
advancing the probe along the pipe such that the sealing element passes a position of the leak;
detecting a change in pressure in the pipe when the sealing element passes the position of the leak.

7. The method according to any one of the preceding claims, further comprising, prior to said inserting step:
identifying an inner diameter and/or cross-sectional shape of the pipe;
selecting the sealing element from a set comprising at least two sealing elements that differ from each other with respect to an outer diameter and/or an outer cross-sectional shape, such that a selected sealing element has an outer diameter and an outer cross-sectional shape that corresponds to said inner diameter and/or cross-sectional shape of the pipe; and
attaching said selected sealing element to the probe.

8. The method according to any one of claims 1 to 6, further comprising:
adjusting a variable outer diameter of the sealing element such that the outer diameter of the sealing element matches the inner diameter of the pipe, thereby allowing the sealing element to slidably seal against the inner surface of the pipe.

9. The method according to any one of the preceding claims, wherein the applying a pressure difference comprises:
connecting a vacuum pump to the pipe; and
removing, by the vacuum pump, air from inside the pipe on the second side of the sealing element, thereby providing the low pressure side of the sealing element.

10. The method according to any one of the preceding claims, wherein proximity of the probe is wirelessly detectable, and wherein the method further comprises determining the position of the probe by scanning a probe detector across the surface, the probe detector being configured to wirelessly detect proximity of the probe.

11. A pipe inspection system for inspection of a pipe, which has a predetermined cross-section and which is installed behind a surface, the pipe inspection system comprising:
a probe, which is insertable into the pipe, the probe comprising:
a camera head configured to provide image data representing a field-of-view of the camera head inside the pipe in the vicinity of the camera head,
a sealing element configured to slidably seal against an inner surface of the pipe while the probe is advanced along the pipe, and
a transmission device configured to transmit the image data to a unit that is external to the pipe,
wherein the external unit is configured for storing, analyzing and/or displaying the image to allow inspection of the pipe.

12. The pipe inspection system according to claim 11, wherein the sealing element is releasably attachable to the probe.

13. The pipe inspection system according to any one of claims 11 or 12, further comprising:
a vacuum pump connectable to the pipe and configured to remove air from inside the pipe.

14. A system comprising a pipe which is installed behind a surface and a pipe inspection system according to any one of claims 11 to 13.

15. A pipe inspection kit for inspection of a pipe, the pipe inspection kit comprising:
a probe, which is insertable into the pipe, the probe comprising:
a camera head configured to provide image data representing a field-of-view of the camera head inside the pipe in the vicinity of the camera head,
at least two sealing elements, each of which is releasably connectable to the probe and configured to slidably seal against an inner surface of the pipe while the probe is advanced along the pipe, wherein the at least two sealing elements differ from each other with respect to an outer diameter and/or an outer cross-sectional shape,
a transmission device configured to transmit the image data to a unit that is external to the pipe,
wherein the external unit is configured for storing, analyzing and/or displaying the image to allow inspection of the pipe.
